# DEMANDE DE BREVET EUROPEEN

(11) **EP 4 390 317 A1**
(43) Date de publication de la demande: **26.06.2024**
(21) Numéro de dépôt: 23217010.0
(22) Date de dépôt: 15.12.2023
(51) Int. Cl.: G01C 21/20, B64D 43/00, G01C 23/00, G06F 3/01

(54) **PROCÉDÉ D' ASSISTANCE AU PILOTAGE D'UN AÉRONEF**

(30) Priorité: 19.12.2022 FR 2213861
(71) Demandeur: Airbus SAS, 31700 Blagnac (FR)
(72) Inventeur: ABDELLI, Kamel, 31300 TOULOUSE (FR)
(74) Mandataire: Cabinet Le Guen Maillet

(57) **Abrégé**

Un procédé (100) d'assistance au pilotage d'un aéronef comprend les étapes suivantes : détecter (102) des obstacles dans un environnement de l'aéronef ; déterminer (106) une zone de protection enveloppant chaque obstacle détecté ; déterminer (108) une trajectoire initiale suivie par l'aéronef ; si la trajectoire initiale pénètre dans une zone de protection, déterminer (110) une trajectoire corrigée de sorte que l'aéronef évite la zone de protection ; appliquer (112) la trajectoire corrigée à l'aéronef ; et émettre (114) au moins une alerte haptique dans un manche de pilotage de l'aéronef, l'alerte haptique indiquant un sens de déflexion apporté à l'aéronef lors de l'application de la trajectoire corrigée. Ainsi, le pilotage est assisté en fournissant des alertes ergonomiques et simples, pour garantir une trajectoire sécuritaire à l'aéronef.

## Description

### DOMAINE TECHNIQUE

L'invention concerne le domaine de l'assistance au pilotage d'un aéronef, et concerne plus particulièrement la détection d'obstacles dans l'environnement d'un aéronef.

### ETAT DE LA TECHNIQUE ANTERIEURE

D'une manière connue, le pilotage d'un aéronef demande des compétences techniques avancées pour maitriser les techniques de pilotage en général et les techniques de pilotage d'un aéronef en particulier.

En effet, les multitudes de commandes existantes dans un aéronef rendent l'utilisation de chaque aéronef complexe. Cette diversité de commandes requiert une spécialisation dans un aéronef donné. La spécialisation dans le pilotage d'un seul aéronef exige de nombreuses étapes de qualification à l'utilisation de l'aéronef, via le passage de brevets et un décompte d'un nombre d'heures de vol.

Or, la tendance qui se dévoile, pour l'occupation aérienne de demain, est un ensemble de véhicules volants à la portée d'une population plus étendue. En d'autres termes, il est nécessaire que certains aéronefs du futur soient plus facilement pilotables, pour être accessibles à un plus grand nombre de personnes ayant moins de qualifications que celles requises jusqu'à présent.

Cette tendance est confirmée par l'essor des eVTOLs (« electrical Vertical Take Off and Landing » en anglais), soit des appareils électriques à décollage et atterrissage verticaux, qui correspondent à une réponse à ce que l'on nomme désormais l'UAM (« Urban Air Mobility en anglais), c'est-à-dire la mobilité aérienne urbaine tend à proposer à plus de personnes de prendre les commandes de machines volantes électriques. Un pilote, ou ce qu'on voudra plutôt être un conducteur, pourra être le taxi aérien urbain de quiconque souhaitera se déplacer dans une zone urbaine, qui ne sera limitée que par la capacité de stockage électrique des batteries fournissant l'énergie du vol (principale contrainte technologique aujourd'hui).

Dans ce contexte, pour pouvoir démocratiser le vol urbain, il est nécessaire de fournir une meilleure ergonomie et une meilleure assistance au pilote.

### EXPOSE DE L'INVENTION

A cet effet, selon un premier aspect, il est proposé un procédé d'assistance au pilotage d'un aéronef, le procédé étant implémenté par un système informatique comprenant de la circuiterie électronique. Le procédé comprend les étapes suivantes :
- détecter des obstacles dans un environnement de l'aéronef ;
- déterminer une zone de protection enveloppant chaque obstacle détecté ;
- déterminer une trajectoire initiale suivie par l'aéronef ;
- si la trajectoire initiale pénètre dans une zone de protection, déterminer une trajectoire corrigée en fonction de la trajectoire initiale de l'aéronef et en fonction de la zone de protection enveloppant chaque obstacle détecté, de sorte que l'aéronef évite la zone de protection ;
- appliquer la trajectoire corrigée à l'aéronef ; et
- émettre au moins une alerte haptique dans un manche de pilotage de l'aéronef, l'alerte haptique indiquant un sens de déflexion apporté à l'aéronef lors de l'application de la trajectoire corrigée à l'aéronef.

Ainsi, le procédé selon l'invention permet d'assister un pilote en corrigeant la trajectoire de l'aéronef pour éviter des obstacles et en fournissant des alertes ergonomiques et simples correspondant à la correction de la trajectoire effectuée.

Selon une disposition particulière, le procédé comprend de détecter une zone d'atterrissage sur la trajectoire initiale suivie par l'aéronef, la zone d'atterrissage détectée étant déterminée comme une destination de la trajectoire initiale de l'aéronef, et une destination de la trajectoire corrigée coïncide avec la destination de la trajectoire initiale.

Selon une disposition particulière, les dimensions de chaque zone de protection sont déterminées proportionnellement à une vitesse de l'aéronef.

Selon une disposition particulière, lorsque l'aéronef est en vol stationnaire au-dessus d'un point de l'environnement, le procédé comprend :
- déterminer une zone de sécurité statique autour de l'aéronef en vol stationnaire, la zone de sécurité statique étant centrée sur l'aéronef et étant statique par rapport audit point de l'environnement ;
- détecter un déplacement de l'aéronef en vol stationnaire hors de la zone de sécurité statique ;
- repositionner l'aéronef en vol stationnaire au centre de la zone de sécurité statique ; et
- émettre au moins une alerte haptique dans le manche de pilotage de l'aéronef, l'alerte haptique indiquant un sens de déflexion apporté à l'aéronef lors du repositionnement de l'aéronef au centre de la zone de sécurité statique.

Selon une disposition particulière, la trajectoire initiale est déterminée en utilisant des données de senseurs et capteurs choisis parmi : une centrale inertielle, une caméra, un lidar, un radar, un système de positionnement par satellite, un système de détermination d'attitudes.

Selon un autre aspect, il est proposé un produit programme d'ordinateur comprenant des instructions de code de programme pour exécuter le procédé selon l'invention, lorsque lesdites instructions sont exécutées par un processeur.

Selon un autre aspect, il est proposé un support de stockage non transitoire sur lequel est stocké un programme d'ordinateur comprenant des instructions de code de programme pour exécuter le procédé selon l'invention, lorsque lesdites instructions sont lues depuis ledit support de stockage non transitoire et exécutées par au moins un processeur.

Selon un autre aspect, il est proposé un système informatique comprenant de la circuiterie électronique configurée pour implémenter une assistance au pilotage d'un aéronef comprenant les étapes suivantes :
- détecter des obstacles dans un environnement de l'aéronef ;
- déterminer une zone de protection enveloppant chaque obstacle détecté ;
- déterminer une trajectoire initiale suivie par l'aéronef ;
- si la trajectoire initiale pénètre dans une zone de protection, déterminer une trajectoire corrigée en fonction de la trajectoire initiale de l'aéronef et en fonction de la zone de protection enveloppant chaque obstacle détecté, de sorte que l'aéronef évite la zone de protection ;
- appliquer la trajectoire corrigée à l'aéronef ; et
- émettre au moins une alerte haptique dans un manche de pilotage de l'aéronef, l'alerte haptique indiquant un sens de déflexion apporté à l' aéronef lors de l'application de la trajectoire corrigée à l'aéronef.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un procédé d'assistance au pilotage d'un aéronef ;
[Fig. 2] illustre schématiquement un exemple de changement d'une trajectoire de l'aéronef en fonction d'alertes haptiques émises dans un manche de pilotage ;
[Fig. 3] illustre schématiquement une étape de stabilisation d'un aéronef en vol stationnaire ;
[Fig. 4] illustre schématiquement un exemple de détermination d'une zone de sécurité statique autour de l'aéronef ; et
[Fig. 5] illustre schématiquement un agencement matériel d'un système informatique qui comprend de la circuiterie électronique pour implémenter le procédé d'assistance au pilotage de l'aéronef.

### EXPOSE DETAILLE DE MODES DE REALISATION

### Procédé d'assistance au pilotage

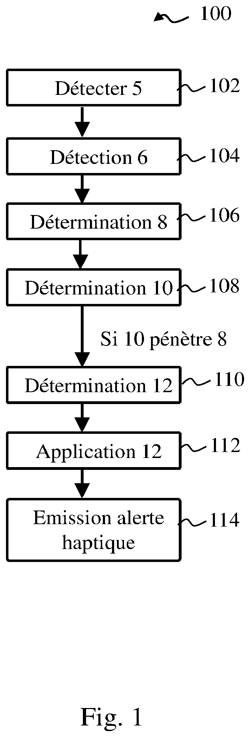

En référence à la Fig. 1, selon un premier aspect, il est proposé un procédé 100 d'assistance au pilotage d'un aéronef 1. Le procédé 100 est implémenté par un système informatique 200 embarqué dans l'aéronef 1. Le système informatique 200 est décrit ci-après.

### Détection d'obstacles et de zones d'atterrissage

Le procédé comprend une étape 102 de détection d'obstacles 5 dans un environnement de l'aéronef 1.

La détection d'obstacles 5 dans un environnement de l'aéronef 1 peut être effectuée de plusieurs manières en analysant l'environnement de l'aéronef 1, notamment par analyse d'images acquises par une ou plusieurs caméras et/ou par analyse de données acquises par un radar et/ou de données acquises par un lidar. D'autres dispositifs d'acquisition de données de l'environnement physique de l'aéronef 1 peuvent être utilisés en complément ou en alternative. Selon un mode de réalisation, un senseur barométrique peut être utilisé, le senseur barométrique déterminant les déplacements vis-à-vis d'un flux d'air ; ces exemples ne limitant pas la portée des senseurs à utiliser, il convient de considérer tout autre équipement permettant de localiser l'aéronef 1 par rapport soit à sa condition par rapport au flux d'air, incluant la température, la pression , la densité, ..., soit de localiser l'aéronef 1 par rapport à sa position locale vis-à-vis des obstacles 5 (comprenant le sol), soit de localiser la position de l'aéronef 1 dans l'espace par rapport à la planète terre et sa verticale locale. L'environnement analysé est ainsi situé dans une région d'intérêt définie par des caractéristiques de positionnement, de champ angulaire et de portée du ou des dispositifs d'acquisition de données de l'environnement physique de l'aéronef 1 (champ de caméra...).

Il peut par exemple s'agir d'une caméra pivotante à 360 degrés, ou de plusieurs caméras couvrant un champ horizontal de 360 degrés autour de l'aéronef 1 et un champ vertical de 360 degrés autour de l'aéronef 1, soit ce qu'on appelle une vision 4π stéradians. De même, un radar et/ou un lidar peuvent être agencés pour réaliser des détections de ce même type à 360 degrés tout autour de l'aéronef 1. Dans un autre exemple, il peut s'agir d'une caméra, d'un radar et/ou d'un lidar, couvrant un champ de 180 degrés centré à l'avant de l'aéronef 1. D'autres valeurs angulaires de champ peuvent être utilisées, en adéquation avec les capacités de mouvement de l'aéronef 1.

Selon une disposition particulière, l'analyse de l'environnement et la détection (étape 102) d'obstacles 5 est effectuée en réalisant une fusion d'images acquises par une ou plusieurs caméras et de données acquises par au moins un lidar et/ou un radar.

Selon une disposition particulière, la détection radar et/ou lidar et l'acquisition d'images peuvent être effectuées d'une part dans des plans longitudinaux et transversaux autour de l'aéronef 1, et d'autre part, selon deux hémisphères positionnés au-dessus et au-dessous de l'aéronef 1. Cette disposition particulière permet une acquisition/détection optimale des obstacles se situant dans l'environnement de l'aéronef 1.

En outre, la fusion des images acquises et des données acquises par le radar et/ou lidar permet au système informatique 200 de réaliser une modélisation tridimensionnelle de l'environnement analysé, selon des techniques de reconstruction de scène en trois dimensions. De telles techniques de reconstruction de scène en trois dimensions sont largement divulguées dans l'état de la technique et ne seront pas plus détaillées ici.

Grâce à la modélisation tridimensionnelle, le système informatique 200 est capable en outre, par analyse géométrique, d'estimer une distance entre l'aéronef 1 et chacun des obstacles 5 détectés dans l'environnement analysé.

Selon un mode de réalisation, la détection d'obstacles 5 est effectuée par un système apprenant (« learning system » en anglais), ou plus généralement un système d'intelligence artificielle, intégré au système informatique 200. Le système apprenant est capable de reconnaitre des obstacles tels que des bâtiments ou des arbres, ou tout autre type d'obstacles, grâce à un entraînement dédié aux obstacles potentiellement rencontrés lors de manoeuvres d'aéronefs (bâtiments, arbres, lignes électriques...).

D'une manière particulièrement avantageuse, dans une étape 104, le système informatique 200 est configuré pour détecter aussi des zones d'atterrissage 6 dans l'environnement. Les zones d'atterrissage 6 sont par exemple balisées ou marquées (e.g., avec un marquage distinctif au sol). Ainsi, par exemple, le système informatique 200 peut reconnaitre un héliport sur un immeuble et détecter l'immeuble comme un obstacle 5 tout en détectant l'héliport comme une zone d'atterrissage 6. Tel que cela sera décrit ci-après les zones d'atterrissage 6 détectées sont utilisées pour déterminer une destination de l'aéronef 1 et déterminer une trajectoire initiale 10.

### Zone de protection

Une fois que les obstacles 5, et éventuellement les zones d'atterrissages 6, sont détectés (étapes 102 et 104), le procédé 100 comprend une étape 106 de détermination d'une zone de protection 8 enveloppant chaque obstacle 5 détecté. Cette détermination peut prendre en compte des caractéristiques de performance intrinsèque à l'aéronef, des limitations dynamiques de confort, et des conditions courantes de la physique du vol de l'aéronef.

Chaque zone de protection 8 est déterminée comme une zone tridimensionnelle enveloppant chaque obstacle 5. Les limites de chaque zone de protection 8 sont positionnées à une distance prédéterminée de l'obstacle 5 correspondant.

D'une manière particulièrement avantageuse, les dimensions de chaque zone de protection 8 sont déterminées proportionnellement à une vitesse de l'aéronef 1. En d'autres termes, les dimensions de chaque zone de protection 8 augmentent proportionnellement avec la vitesse de l'aéronef 1. Ainsi, plus l'aéronef 1 va vite, plus les dimensions de chaque zone de protection 8 sont importantes, pour permettre un évitement de l'obstacle 5 (plus la vitesse augmente, plus une manoeuvre d'évitement doit être anticipée).

Ainsi, l'aéronef 1 peut éventuellement pénétrer dans la zone de protection 8, sans risquer de collision avec l'obstacle 5, car les dimensions de la zone de protection 8 sont adaptées pour permettre à l'aéronef d'éviter l'obstacle 5.

Selon un mode de réalisation, chaque zone de protection 8 est déterminée proportionnellement à une vitesse de l'aéronef 1 et de caractéristiques de performance intrinsèque à l'aéronef, des limitations dynamiques de confort, et des conditions courantes de la physique du vol de l'aéronef.

### Détermination de trajectoire

Suite à la détermination d'une dite zone de protection 8 enveloppant chaque obstacle 5 détecté (étape 106), le procédé comprend une étape 108 de détermination d'une trajectoire initiale 10 suivie par l'aéronef 1.

Selon une disposition particulière, la trajectoire initiale 10 est déterminée en utilisant des données de senseurs et capteurs choisis parmi : une centrale inertielle, une caméra, un lidar, un radar, un système de positionnement par satellite, un système de détermination d'attitudes.

Selon une disposition particulièrement avantageuse, la trajectoire initiale 10 est déterminée en fusionnant les données acquises par les différents capteurs et senseurs énumérés ci-avant.

En sus, comme indiqué précédemment, lors de la détection (étape 102) d'obstacle 5, des zones d'atterrissage 6 ont pu être détectées (étape 104). Si une zone d'atterrissage 6 se trouve sur la trajectoire initiale 10, alors cette zone d'atterrissage 6 est déterminée comme une destination de la trajectoire initiale 10. Selon une disposition particulière, la destination de la trajectoire initiale 10 peut être une zone d'atterrissage 6 ou un point de destination intermédiaire dans l'espace souvent connu par le terme anglais « Point in space » avec l'acronyme PinS. Dans ce cas, le point de destination intermédiaire est préalablement indiqué par un pilote de l'aéronef, par exemple au moyen d'un enregistrement de la latitude et la longitude du point de destination intermédiaire.

### Trajectoire corrigée

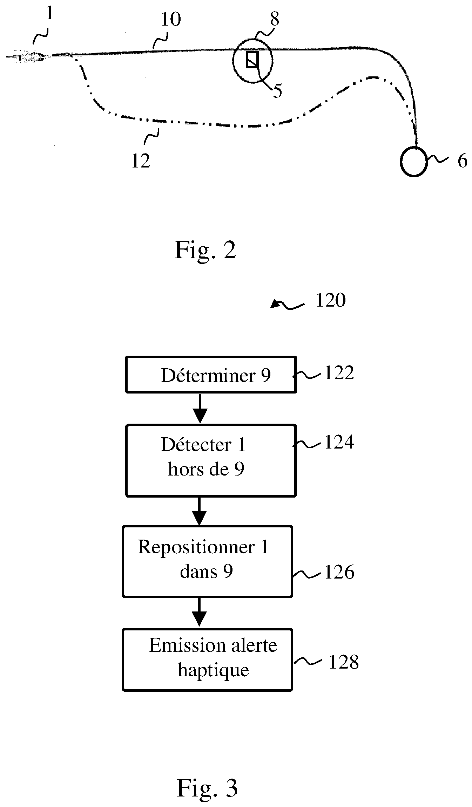

Tel que schématisé sur la Fig. 2, si la trajectoire initiale 10 pénètre dans une zone de protection 8, alors le procédé comprend une étape consistant à déterminer 110 une trajectoire corrigée 12 en fonction de la trajectoire initiale 10 de l'aéronef 1 et en fonction de la zone de protection 8 enveloppant chaque obstacle 5 détecté, de sorte que l'aéronef évite la zone de protection 8.

D'une manière particulièrement avantageuse, la trajectoire corrigée est déterminée en utilisant la destination de la trajectoire initiale 10. Ainsi, la destination de la trajectoire corrigée 12 coïncide avec la destination de la trajectoire initiale 10.

En d'autres termes, la trajectoire corrigée 12 permet d'éviter l'obstacle 5 puis de reprendre une trajectoire correspondant à la trajectoire initiale 10.

La trajectoire corrigée 12 ainsi déterminée est appliquée à l'aéronef 1, dans une étape 112.

Ainsi, le procédé permet à l'aéronef 1 d'éviter un obstacle 5 de manière autonome, sans intervention d'un pilote.

### Alertes haptiques

Dans une étape 114, le système informatique 200 émet des alertes haptiques dans un manche de pilotage de l'aéronef 1, pour indiquer un sens de déflexion apporté à l'aéronef 1 lors de l'application de la trajectoire corrigée 12 à l'aéronef 1.

L'émission d'alertes haptiques est une disposition particulièrement avantageuse de l'invention. En effet, les alertes haptiques permettent d'informer le pilote sur le comportement de l'aéronef 1 et sur un changement de trajectoire. En outre, les alertes haptiques permettent de faire coïncider le mouvement de l'aéronef 1 avec le mouvement du manche de pilotage.

Selon une disposition particulière, les alertes haptiques peuvent être doublées d'alertes sonores et/ou lumineuses, par exemple émises dans un cockpit de l'aéronef 1.

### Zone de sécurité statique

Parallèlement à la détermination et la correction de trajectoire pour éviter un obstacle 5, le procédé 100 comprend aussi une étape 120 de stabilisation de vol stationnaire de l'aéronef 1 au-dessus d'un point de l'environnement (schématisée sur la Fig. 3). L'étape 120 de stabilisation de vol stationnaire est mise en oeuvre lorsqu'il est détecté que l'aéronef 1 est en vol stationnaire. La détection de vol stationnaire peut être faite via des données de systèmes avioniques détectant un vol stationnaire, ou alors en déterminant une combinaison de facteurs tels qu'une trajectoire nulle et une altitude stable.

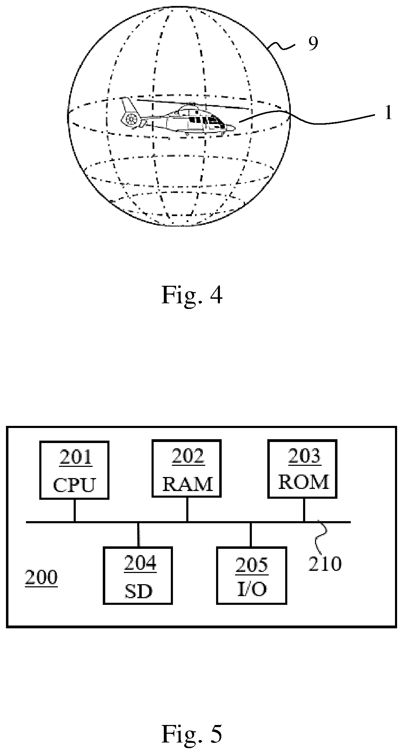

L'étape 120 de stabilisation de vol stationnaire comprend tout d'abord une phase consistant à déterminer 122 une zone de sécurité statique 9 autour de l'aéronef 1 en vol stationnaire (schématisée sur la Fig. 4), la zone de sécurité statique 9 étant centrée sur l'aéronef 1 et étant statique par rapport audit point de l'environnement. En d'autres termes, la phase 122 consiste à déterminer une zone de sécurité statique 9 qui forme une sphère autour de l'aéronef 1. La zone de sécurité statique 9 est centrée sur l'aéronef 1, mais est fixe par rapport à un point au sol. Ainsi, une fois que la zone de sécurité statique 9 est déterminée, l'aéronef 1 peut bouger dans la zone de sécurité statique 9.

Ensuite, l'étape de stabilisation de vol stationnaire 120 comprend une phase 122 consistant à détecter un déplacement de l'aéronef 1 en vol stationnaire hors de la zone de sécurité statique 9. En d'autres termes, il s'agit de détecter si l'aéronef 1 (qui est toujours dans une configuration de vol stationnaire) sort de la zone de sécurité statique 9. Une telle sortie peut par exemple être causée par une rafale de vent.

S'il est détecté que l'aéronef 1 sort de la zone de sécurité statique 9, l'étape de stabilisation de vol stationnaire 120 comprend une phase 126 consistant à repositionner l'aéronef 1, en vol stationnaire, au centre de la zone de sécurité statique 9, et d'émettre 128 au moins une alerte haptique dans le manche de pilotage de l'aéronef 1. Dans cette étape, de même que lors de la correction de trajectoire, l'alerte haptique indique un sens de déflexion apporté à l'aéronef 1 lors du repositionnement de l'aéronef 1 au centre de la zone de sécurité statique 9.

### Système informatique

Selon un autre aspect, il est proposé un système informatique 200 comprenant de la circuiterie électronique configurée pour implémenter un procédé 100 d'assistance au pilotage d'un aéronef 1.

Tel que schématisé sur la Fig. 5, le système informatique 200 peut comporter, reliés par un bus de communication 210 : un processeur 201 ; une mémoire vive 202 ; une mémoire morte 203, par exemple de type ROM (« Read Only Memory » en anglais) ou EEPROM (« Electrically-Erasable Programmable Read Only Memory » en anglais) ; une unité de stockage 204, telle qu'un disque dur HDD (« Hard Disk Drive » en anglais), ou un lecteur de support de stockage, tel qu'un lecteur de cartes SD (« Secure Digital » en anglais) ; et un gestionnaire d'interfaces d'entrées-sorties 205.

Le processeur 201 est capable d'exécuter des instructions chargées dans la mémoire vive 202 à partir de la mémoire morte 203, d'une mémoire externe, d'un support de stockage (tel qu'une carte SD), ou d'un réseau de communication. Lorsque le système informatique 200 est mis sous tension, le processeur 201 est capable de lire de la mémoire vive 202 des instructions et de les exécuter. Ces instructions forment un programme d'ordinateur permettant l'implémentation, par le processeur 201, du procédé et des étapes décrits ici.

Tout ou partie du procédé et des étapes décrits ci-avant peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant dédié, par exemple un composant FPGA (« Field Programmable Gate Array » en anglais) ou ASIC (« Application-Specific Integrated Circuit » en anglais). D'une manière générale, le système informatique 200 comporte de la circuiterie électronique adaptée et configurée pour implémenter, sous forme logicielle et/ou matérielle, les procédé et étapes décrits ci-avant en relation avec le système informatique 200 en question.

## Revendications

1. Procédé (100) d'assistance au pilotage d'un aéronef (1), le procédé étant implémenté par un système informatique (200) comprenant de la circuiterie électronique et le procédé étant **caractérisé en ce qu'**il comprend les étapes suivantes :
- détecter (102) des obstacles (5) dans un environnement de l'aéronef (1) ;
- déterminer (106) une zone de protection (8) enveloppant chaque obstacle détecté ;
- déterminer (108) une trajectoire initiale (10) suivie par l'aéronef (1) ;
- si la trajectoire initiale (10) pénètre dans une zone de protection (8), déterminer (110) une trajectoire corrigée (12) en fonction de la trajectoire initiale (10) de l'aéronef (1) et en fonction de la zone de protection (8) enveloppant chaque obstacle détecté, de sorte que l'aéronef (1) évite la zone de protection (8) ;
- appliquer (112) la trajectoire corrigée (12) à l'aéronef (1) ; et
- émettre (114) au moins une alerte haptique dans un manche de pilotage de l'aéronef (1), l'alerte haptique indiquant un sens de déflexion apporté à l'aéronef (1) lors de l'application de la trajectoire corrigée (12) à l'aéronef (1).

2. Procédé selon la revendication 1, comprenant : détecter (104) une zone d'atterrissage (6) sur la trajectoire initiale (10) suivie par l'aéronef (1), la zone d'atterrissage (6) détectée étant déterminée comme une destination de la trajectoire initiale (10) de l'aéronef (1), et une destination de la trajectoire corrigée (12) coïncide avec la destination de la trajectoire initiale (10).

3. Procédé (100) selon l'une quelconque des revendications précédentes, dans lequel les dimensions de chaque zone de protection (8) sont déterminées proportionnellement à une vitesse de l'aéronef (1).

4. Procédé (100) selon l'une quelconque des revendications précédentes, dans lequel lorsque l'aéronef (1) est en vol stationnaire au-dessus d'un point de l'environnement, le procédé comprend :
- déterminer (122) une zone de sécurité statique (9) autour de l'aéronef (1) en vol stationnaire, la zone de sécurité statique (9) étant centrée sur l'aéronef (1) et étant statique par rapport audit point de l'environnement ;
- détecter (124) un déplacement de l'aéronef (1) en vol stationnaire hors de la zone de sécurité statique (9) ;
- repositionner (126) l'aéronef (1) en vol stationnaire au centre de la zone de sécurité statique (9) ; et
- émettre (128) au moins une alerte haptique dans le manche de pilotage de l'aéronef (1), l'alerte haptique indiquant un sens de déflexion apporté à l'aéronef (1) lors du repositionnement de l'aéronef (1) au centre de la zone de sécurité statique (9).

5. Procédé (100) selon l'une quelconque des revendications précédentes, dans lequel la trajectoire initiale (10) est déterminée en utilisant des données de senseurs et capteurs choisis parmi : une centrale inertielle, une caméra, un lidar, un radar, un système de positionnement par satellite, un système de détermination d'attitudes.

6. Produit programme d'ordinateur comprenant des instructions de code de programme pour exécuter le procédé (100) selon l'une quelconque des revendications 1 à 5, lorsque lesdites instructions sont exécutées par au moins un processeur.

7. Support de stockage non transitoire sur lequel est stocké un programme d'ordinateur comprenant des instructions de code de programme pour exécuter le procédé (100) selon l'une quelconque des revendications 1 à 5, lorsque lesdites instructions sont lues depuis ledit support de stockage non transitoire et exécutées par un processeur.

8. Système informatique (200) comprenant de la circuiterie électronique configurée pour implémenter une assistance au pilotage d'un aéronef comprenant les étapes suivantes :
- détecter (102) des obstacles (5) dans un environnement de l'aéronef (1) ;
- déterminer (106) une zone de protection (8) enveloppant chaque obstacle détecté ;
- déterminer (108) une trajectoire initiale (10) suivie par l'aéronef (1) ;
- si la trajectoire initiale (10) pénètre dans une zone de protection (8), déterminer (110) une trajectoire corrigée (12) en fonction de la trajectoire initiale (10) de l'aéronef (1) et en fonction de la zone de protection (8) enveloppant chaque obstacle détecté, de sorte que l'aéronef évite la zone de protection (8) ;
- appliquer (112) la trajectoire corrigée (12) à l'aéronef (1) ; et
- émettre (114) au moins une alerte haptique dans un manche de pilotage de l'aéronef (1), l'alerte haptique indiquant un sens de déflexion apporté à l'aéronef (1) lors de l'application de la trajectoire corrigée (12) à l'aéronef (1).
